# EUROPÄISCHE PATENTSCHRIFT

(11) **EP 4 010 940 B1**
(45) Veröffentlichungstag und Bekanntmachung des Hinweises auf die Patenterteilung: **24.01.2024**
(21) Anmeldenummer: 20737004.0
(22) Anmeldetag: 06.07.2020
(51) Int. Cl.: H01M 50/183

(54) **DICHTUNG FÜR EIN BATTERIEGEHÄUSE EINER HOCHVOLTBATTERIE, VERFAHREN, BATTERIEGEHÄUSE, HOCHVOLTBATTERIE SOWIE KRAFTFAHRZEUG**
SEAL FOR BATTERY CASING OF A HIGH VOLTAGE BATTERY, METHOD, BATTERY CASING, HIGH VOLTAGE BATTERY AND POWERED VEHICLE
JOINT POUR BOÎTIER DE BATTERIE D'UNE BATTERIE À HAUTE TENSION, MÉTHODE, BOÎTIER DE BATTERIE, BATTERIE À HAUTE TENSION ET VÉHICULE ALIMENTÉ

(30) Priorität: 09.08.2019 DE 102019121510
(43) Veröffentlichungstag der Anmeldung: 15.06.2022
(73) Patentinhaber: Bayerische Motoren Werke Aktiengesellschaft, 80809 München (DE)
(72) Erfinder: OBERMAIER, Andreas, 80807 München (DE); BRAUN, Josef, 83620 Feldkirchen-Westerham (DE); ZIMMERMANN, Joern, 80992 Muenchen (DE)
(86) Internationale Anmeldenummer: PCT/EP2020/068992
(87) Internationale Veröffentlichungsnummer: WO 2021/028118

(56) Entgegenhaltungen:
- WO-A1-2010/098923
- DE-A1-102014 213 682
- US-A- 3 754 997

## Beschreibung

Die Erfindung betrifft eine Dichtung für ein Batteriegehäuse einer Hochvoltbatterie eines Kraftfahrzeugs. Die Erfindung betrifft außerdem ein Verfahren zum Herstellen der Dichtung, ein Batteriegehäuse, eine Hochvoltbatterie sowie ein Kraftfahrzeug.

Vorliegend richtet sich das Interesse auf wiederaufladbare Hochvoltbatterien bzw. Hochvoltakkumulatoren, welche beispielsweise als Traktionsbatterien für elektrisch antreibbare Kraftfahrzeuge eingesetzt werden können. Solche Hochvoltbatterien weisen üblicherweise ein Batteriegehäuse auf, in dessen Innenraum unter anderem eine Vielzahl von Batteriezellen angeordnet ist. Um diese Batteriezellen vor Umwelteinflüssen, beispielsweise Feuchtigkeit und Schmutz, zu schützen, muss das Batteriegehäuse dicht abgeschlossen sein. Daher ist üblicherweise eine Dichtung zwischen einem Gehäuseunterteil des Batteriegehäuses und einem Gehäusedeckel des Batteriegehäuses angeordnet. Diese Dichtung kann beispielsweise rahmenförmig ausgebildet sein und vor dem Abschließen des Batteriegehäuses an einem Gehäuseflansch des Gehäuseunterteils angeordnet und befestigt werden. Nach Abschließen des Batteriegehäuses durch Aufsetzen des Gehäusedeckels auf das Gehäuseunterteil wird durch die Dichtung ein Eindringen von Schmutz und Feuchtigkeit in den Innenraum des Batteriegehäuses verhindert.

Um besonders hohe Reichweiten für das elektrisch antreibbare Kraftfahrzeug bereitstellen zu können, werden die Hochvoltbatterien mit einer hohen Anzahl an Batteriezellen ausgestattet, wodurch das Batteriegehäuse große Außenabmessungen aufweist. Soll die rahmenförmige Dichtung aus einem Stück gefertigt werden, so muss üblicherweise ein entsprechend großes Herstellungswerkzeug zum Herstellen der Dichtung bereitgestellt werden. Dies kann zu hohen Herstellungskosten für die Dichtung führen. Im Falle, dass ein solches Herstellungswerkzeug nicht bereitgestellt werden kann, muss die Dichtung aus mehreren Einzelteilen gefertigt werden, welche vor oder bei dem Anordnen am Gehäuseflansch rahmenförmig zusammengesetzt werden. Dadurch können sich jedoch unerwünschte Undichtigkeiten im Bereich von Übergängen zwischen den Einzelteilen der Dichtung ergeben.

Es ist Aufgabe der vorliegenden Erfindung, eine kostengünstige und zuverlässige Dichtung für ein Batteriegehäuse einer Hochvoltbatterie bereitzustellen.

Diese Aufgabe wird erfindungsgemäß durch eine Dichtung, ein Verfahren, ein Batteriegehäuse, eine Hochvoltbatterie sowie ein Kraftfahrzeug mit den Merkmalen gemäß den jeweiligen unabhängigen Patentansprüchen gelöst. Vorteilhafte Ausführungen der Erfindung sind Gegenstand der abhängigen Patentansprüche, der Beschreibung sowie der Figuren.

Eine erfindungsgemäße Dichtung für ein Batteriegehäuse einer Hochvoltbatterie eines Kraftfahrzeugs ist von einer für ein Herstellungswerkzeug der Dichtung vorgesehenen Herstellungslage in eine für das Batteriegehäuse vorgesehene Einbaulage überführbar. In der Einbaulage weist die Dichtung ein größeres Außenmaß auf als in der Herstellungslage. Die Dichtung weist einen Dichtungskörper zum Anordnen zwischen einem Gehäuseflansch eines Gehäuseunterteils des Batteriegehäuses und einem Gehäusedeckel des Batteriegehäuses auf. Außerdem umfasst die Dichtung Positionierelemente sowie Fixierelemente zum Positionieren und Fixieren des Dichtungskörpers an dem Gehäuseflansch.

Der Dichtungskörper ist als ein einteiliger, rahmenförmiger Dichtungsring aus einem elastischen Kunststoff ausgebildet. Zumindest ein Dichtungskörperabschnitt ist reversibel längenveränderlich ausgebildet und weist dazu Faltbereiche auf. Der zumindest eine Dichtungskörperabschnitt stellt im gefalteten Zustand der Faltbereiche die Herstellungslage der Dichtung und im entfalteten Zustand der Faltbereiche die Einbaulage der Dichtung bereit. Außerdem weist der Dichtungskörper Positionierbereiche und Fixierbereiche auf. Die Positionierbereiche und Fixierbereiche, in welchen die Positionierelemente und Fixierelemente angeordnet sind, sind abseits der Faltbereiche im Dichtungskörper ausgebildet und weisen eine größere Breite auf als die Faltbereiche.

Die Erfindung betrifft außerdem ein Verfahren zum Herstellen einer erfindungsgemäßen Dichtung in einem Herstellungswerkzeug. Zum Herstellen des einstückigen Dichtungskörpers werden die Faltbereiche, die Positionierbereiche und Fixierbereiche durch rahmenförmiges Spritzgießen eines elastischen Kunststoffes in unterschiedlichen Breiten ausgebildet. Die Faltbereiche zumindest eines Dichtungskörperabschnitts werden zum Bereitstellen der Herstellungslage der Dichtung im gefalteten Zustand hergestellt. Während und/oder nach dem Herstellen des Dichtungskörpers werden die Positionierelemente und die Fixierelemente in den Positionierbereichen und den Fixierbereichen an dem Dichtungskörper angeordnet.

Ferner gehört zur Erfindung ein Batteriegehäuse für eine Hochvoltbatterie mit einem Gehäuseunterteil, einem Gehäusedeckel und einer erfindungsgemäßen Dichtung, welche zwischen einem Gehäuseflansch des Gehäuseunterteils und dem Gehäusedeckel angeordnet ist. Insbesondere ist in dem Gehäuseflansch eine Nut ausgebildet, in welcher die Dichtung angeordnet ist.

Das Gehäuseunterteil und der Gehäusedeckel umschließen einen Innenraum, in welchem eine Vielzahl von Batteriezellen der Hochvoltbatterie angeordnet werden kann. Der Gehäusedeckel ist insbesondere plattenförmig ausgebildet. Das Gehäuseunterteil ist insbesondere durch einen plattenförmigen Gehäuseboden und von dem Gehäuseboden nach oben in Richtung des Gehäusedeckels abstehende Gehäusemantelwände gebildet. Der Gehäuseflansch ist beispielsweise durch einen nach außen ragenden, kragenartigen Randabschnitt der Gehäusemantelwände gebildet. Eine Form des Batteriegehäuses, durch welche eine Form des Gehäuseflansches vorgegeben ist, kann beliebig ausgebildet sein. Beispielsweise kann das Batteriegehäuse im Wesentlichen quaderförmig bzw. kastenförmig mit einem im Wesentlichen rechteckförmigen Gehäuseflansch ausgebildet sein. Unter einem im Wesentlichen quaderförmigen Batteriegehäuse ist beispielsweise auch ein quaderförmiges Batteriegehäuse zu verstehen, welches Einbuchtungen oder Ausbuchtungen aufweist. Bei einem solchen Batteriegehäuse weist auch der Gehäuseflansch Einbuchtungen oder Ausbuchtungen auf.

Um den Innenraum des Batteriegehäuses gegenüber einer Umgebung des Batteriegehäuses abzudichten, ist zwischen dem Gehäuseunterteil und dem Gehäusedeckel die Dichtung angeordnet. Die Dichtung ist zwischen zwei Zuständen bzw. Lagen, nämlich der Herstellungslage und der Einbaulage, überführbar. Die Dichtung weist den Dichtungskörper auf, welcher als der rahmenförmige Dichtungsring ausgebildet ist. Unter einem rahmenförmigen Dichtungsring ist insbesondere ein Dichtungskörper mit Rahmenkanten und Rahmenecken zu verstehen, welche eine geschlossene Form ausbilden. Die Form und das Außenmaß des Dichtungsringes in der Einbaulage korrespondieren mit einer Form und mit Abmessungen des Gehäuseflansches. Bei einem rechteckförmigen Gehäuseflansch ist somit auch der rahmenförmige Dichtungsring rechteckförmig ausgebildet. Falls beispielsweise in dem Gehäuseflansch Einbuchtungen vorgesehen sind, so weist auch der rahmenförmige Dichtungsring in der Einbaulage Einbuchtungen auf. Der Dichtungskörper ist dabei einstückig bzw. einteilig aus dem elastisch verformbaren Kunststoff, insbesondere einem Elastomer, durch Spritzgießen hergestellt. Durch die geschlossene Form und die Einstückigkeit des Dichtungsrings existieren insbesondere keine Fügestellen bzw. Verbindungsstellen am Dichtungskörper, an welchen sich im eingebauten Zustand der Dichtung Dichtungsprobleme ergeben können.

Um den Dichtungskörper in einer definierten Form mit einer definierten Position an dem Gehäuseflansch anordnen zu können, weist die Dichtung die Fixierelemente und die Positionierelemente auf, welche in den Positionierbereichen und Fixierbereichen des Dichtungskörpers angeordnet sind. Dabei können die Fixierelemente und/oder die Positionierelemente zumindest teilweise einteilig mit dem Dichtungskörper ausgebildet sein. Auch können die Fixierelemente und/oder die Positionierelemente zumindest teilweise als zu dem Dichtungskörper separate Elemente ausgebildet sein und am Dichtungskörper befestigt sein. Die Positionierelemente und/oder Fixierelemente können zumindest teilweise aus demselben Material gefertigt sein wie der Dichtungskörper oder ein zu dem Dichtungskörper unterschiedliches Material aufweisen. Ein Fixierelement und ein Positionierelement können dabei als zueinander separate Elemente ausgebildet sein. In diesem Fall sind auch der Positionierbereich und der Fixierbereich als separate Bereiche ausgebildet. Alternativ dazu können ein Fixierelement und ein Positionierelement zu einem multifunktionalen Element zusammengefasst sein. In diesem Fall sind auch der Positionierbereich und der Fixierbereich zu einem Bereich zusammengefasst. Das multifunktionale Element dient also zum Positionieren und Fixieren des Dichtungskörpers am Gehäuseflansch.

Abseits der Positionierbereiche und der Fixierbereiche sind die Faltbereiche in dem Dichtungskörper ausgebildet. Die Faltbereiche werden dadurch ausgebildet, dass eine Breite des Dichtungskörpers im Vergleich zur Breite des Dichtungskörpers in den Positionierbereichen und Fixierbereichen verringert ist. Der Kunststoff wird beim Herstellen des Dichtungskörpers derart geformt, dass der zumindest eine reversibel längenveränderliche Dichtungskörperabschnitt entlang seiner Länge eine variierende Breite aufweist. Der Dichtungskörper ist also bereichsweise unter Ausbildung der Faltbereiche verjüngt bzw. eingeschnürt. Durch Falten der Faltbereiche kann der zugehörige Dichtungskörperabschnitt in seiner Länge verkürzt werden. Durch Entfalten der Faltbereiche kann der zugehörige Dichtungskörperabschnitt in seiner Länge wieder vergrößert werden.

Die Faltbereiche bzw. Scharnierbereiche sind dabei insbesondere in denjenigen Dichtungskörperabschnitten angeordnet, welche Rahmenkanten ausbilden, nicht aber in den Rahmenecken. Insbesondere an Ecken des Batteriegehäuses können Dichtungsprobleme auftreten, weswegen die Dichtung hier besonders zuverlässig ausgebildet sein sollte. Daher sind die Rahmenecken des Dichtungskörpers, welche zum Abdichten des Batteriegehäuses im Bereich der Ecken ausgebildet sind, ohne Faltbereiche ausgebildet. Vorzugsweise sind die Rahmenecken sogar verstärkt und mit einer höheren Steifigkeit ausgebildet als die Rahmenkanten. Jedoch können die Rahmenecken Positionierbereiche und/oder Fixierbereiche aufweisen.

Zum Bereitstellen der Herstellungslage der Dichtung werden die Faltbereiche im gefalteten Zustand bereitgestellt. Im gefalteten Zustand der Faltbereiche wird durch diese jeweils ein bogenförmiger Verlauf, beispielsweise eine Biegung oder ein Knick, in dem Dichtungskörperabschnitt gebildet. In dieser Herstellungslage weist der die Faltbereiche aufweisende Dichtungskörperabschnitt eine erste Länge auf, wodurch der Dichtungskörper ein erstes Außenmaß und damit einen ersten Platzbedarf aufweist. Zum Bereitstellen der Einbaulage der Dichtung werden die Faltbereiche wieder im entfalteten Zustand bereitgestellt und wieder ein geradliniger Verlauf in dem Dichtungskörperabschnitt gebildet. In dieser Einbaulage weist der die Faltbereiche aufweisende Dichtungskörperabschnitt eine im Vergleich zur ersten Länge größere zweite Länge auf, wodurch der Dichtungskörper ein im Vergleich zum ersten Außenmaß größeres zweites Außenmaß sowie einen im Vergleich zum ersten Platzbedarf größeren zweiten Platzbedarf aufweist.

Der Erfindung liegt die Erkenntnis zugrunde, dass die Abmessungen des Gehäuseflansches und damit das Außenmaß der Dichtung größer sein können, als Platz im Herstellungswerkzeug zur Verfügung steht. Daher wird der Dichtungskörper in dem Herstellungswerkzeug in der platzsparenden Herstellungslage gefertigt. Um die Dichtung an dem Gehäuseflansch, beispielsweise in einer Nut im Gehäuseflansch, anzuordnen, wird der Dichtungskörper wieder aufgespannt und die Einbaulage bereitgestellt. Eine solche faltbare, einstückige Dichtung kann besonders platzsparend und damit kostengünstig hergestellt werden und ermöglicht überdies eine zuverlässige Abdichtung des Batteriegehäuses.

Insbesondere weist der Dichtungskörper in Dichtungskörperabschnitten, welche zumindest zwei gegenüberliegenden Rahmenkanten des Dichtungskörpers ausbilden, jeweils zumindest vier Faltbereiche auf, durch welche in den Rahmenkanten zum Reduzieren ihrer Längen jeweils zumindest eine nach innen ragende Lasche klappbar ist. Durch die vier Faltbereiche pro Dichtungskörperabschnitt beträgt ein Biegewinkel bzw. Knickwinkel der Dichtungskörperabschnitt in den Faltbereichen mindestens 90°. Dies ist besonders vorteilhaft, da kleinere Knickwinkel ein Material des Dichtungskörpers in den Faltbereichen stärker belasten würden und Risse oder Brüche im Material in den Faltbereichen zur Folge haben können.

Vorzugsweise ist die Dichtung als eine Profildichtung ausgebildet. Der Dichtungskörper weist zumindest zwei, an zumindest einem Rand des Dichtungskörpers verlaufende Dichtlippen auf. Die Dichtlippen sind dabei in einer senkrecht zur Breitenrichtung des Dichtungskörpers orientierten Höhenrichtung orientiert ausgebildet. Im angeordneten Zustand der Dichtung am Gehäuseflansch stehen die zumindest zwei Dichtlippen nach oben hin in Richtung des Gehäusedeckels und/oder nach unten in Richtung des Gehäuseflansches ab. Beispielsweise kann es sein, dass die beiden Dichtlippen an einem Rand des Dichtungskörpers, beispielsweise einem Außenrand des Dichtungskörpers, verlaufen, wobei eine Dichtlippe nach oben hin absteht und eine Dichtlippe nach unten hin absteht. In diesem Fall sind die Positionierelemente und Fixierelemente neben den beiden Dichtlippen an dem Dichtungskörper angeordnet. Auch kann es sein, dass die Dichtlippen beabstandet zueinander an zwei gegenüberliegenden Rändern, einem Außenrand und einem dem Außenrand gegenüberliegenden Innenrand des Dichtungskörpers, angeordnet sind. Die Dichtlippen können dabei in dieselbe Richtung oder in entgegengesetzte Richtungen entlang der Höhenrichtung orientiert sein. In diesem Fall sind die Positionierelemente und die Fixierelemente zwischen den Dichtlippen an dem Dichtungskörper angeordnet.

Die Dichtlippen stellen Barrieren für Feuchtigkeit und Schmutz dar und verhindern besonders zuverlässig ein Eindringen von Feuchtigkeit und Schmutz in den Innenraum des Batteriegehäuses. Auch kann der Dichtungskörper eine weitere Dichtlippe aufweisen, welche beispielsweise zwischen den an den Rändern verlaufenden Dichtlippen angeordnet ist. Beispielsweise können die an den Rändern verlaufenden Dichtlippen nach oben in Richtung des Gehäusedeckels orientiert sein, während die zwischen den Rändern verlaufende Dichtlippe nach unten in Richtung des Gehäuseflansches orientiert ist, oder umgekehrt.

Es erweist sich als vorteilhaft, wenn die Faltbereiche und/oder die Positionierbereiche und/oder die Fixierbereiche zum Vergrößern des Außenmaßes der Dichtung in der Einbaulage für die Anordnung in einer Nut des Gehäuseflansches überstreckbar ausgebildet sind. Im unüberstreckten Zustand des oder der jeweiligen Bereiche weist die Dichtung in der Einbaulage ein geringeres Außenmaß auf als Abmessungen der Nut des Gehäuseflansches. Zum Anordnen in der Nut wird zumindest einer der Bereiche überstreckt, um die Dichtungskörperabschnitte weiter zu verlängern und das Außenmaß an die Abmessungen der Nut anzupassen. Dann wird die Dichtung in der Nut angeordnet. Durch das Überstrecken wird die Dichtung auch im unfixierten Zustand durch die Fixierelemente und Positionierelemente in der Nut sowie in Form gehalten, sodass in vorteilhafter Weise eine Anzahl an Positionierelementen und Fixierelementen verringert werden kann.

Es kann vorgesehen sein, dass die Positionierbereiche und die Fixierbereiche in ersten streifenförmigen Abschnitten des Dichtungskörpers angeordnet sind und die Faltbereiche durch zweite streifenförmige Abschnitte des Dichtungskörpers ausgebildet sind, wobei die ersten streifenförmigen Abschnitte eine erste Breite aufweisen und die zweiten streifenförmigen Abschnitte eine im Vergleich zur ersten Breite kleinere zweite Breite aufweisen. Die Rahmenkanten des Dichtungsrings sind also durch mehrere streifenförmige Abschnitte gebildet. Beispielsweise können zumindest zwei gegenüberliegende Rahmenkanten des rahmenförmigen Dichtungsringes aus den ersten streifenförmigen Abschnitten und den zweiten streifenförmigen Abschnitten gebildet sein. Jeder erste streifenförmige Abschnitt kann zumindest einen Positionierbereich und/oder zumindest einen Fixierbereich aufweisen. Die zweiten streifenförmigen Abschnitte bilden die Faltbereiche aus. Die ersten streifenförmigen Abschnitte weisen dabei die erste Breite auf und die zweiten streifenförmigen Abschnitte weisen die im Vergleich zur ersten Breite kleinere zweite Breite auf.

In einer Weiterbildung der Erfindung sind die Positionierelemente zumindest teilweise als Durchgangsöffnungen in dem Dichtungskörper zum Durchführen von Befestigungselementen, über welche der Gehäusedeckel am Gehäuseflansch befestigbar ist, ausgebildet. Die Positionierbereiche können beispielsweise als Ösen, welche die Durchgangsöffnungen umgeben, ausgebildet sein, indem die Breite des Dichtungskörpers in den an die Durchgangsöffnungen angrenzenden Bereichen gegenüber den Faltbereichen vergrößert ist. Auch können die Positionierbereiche Teilbereiche eines ersten streifenförmigen Abschnitts sein, in welchem die Durchgangsöffnungen angeordnet sind.

Der Gehäusedeckel und der Gehäuseflansch weisen Befestigungsbereiche, beispielsweise Schraublöcher, auf, welche mit den Befestigungselementen, beispielsweise Schrauben, verbindbar sind. Die Durchgangsöffnungen werden beim Anordnen der Dichtung am Gehäuseflansch überlappend mit den Befestigungsbereichen des Gehäuseflansches angeordnet. Die Durchgangsöffnungen fungieren somit als Abstandshalter und dienen der korrekten Positionierung der Dichtung am Gehäuseflansch. Beispielsweise können in den Befestigungsbereichen des Gehäuseflansches Buchsen zum Aufnehmen der Befestigungselemente angeordnet sein. Beim Positionieren der Dichtung am Gehäuseflansch können die Durchgangsöffnungen des Dichtungskörpers über die Buchsen gestülpt werden. Die Buchsen können beispielsweise aus Aluminium gebildet sein und eine kontrollierte Anordnung bzw. Verpressung der Dichtung sicherstellen.

Auch kann vorgesehen sein, dass die Dichtung Buchsen, beispielsweise aus Aluminium, aufweist, welche in den Durchgangsöffnungen des Dichtungskörpers angeordnet sind und welche mit dem Dichtungskörper mechanisch verbunden sind. Eine Durchgangsöffnung und die darin angeordnete Buchse bildet also ein Positionierelement. Beispielsweise können die Buchsen direkt im Herstellungswerkzeug mit dem Dichtungskörper verbunden werden. Dazu können die Buchsen beim Spritzgießen des Dichtungskörpers umspritzt werden und so am Dichtungskörper befestigt werden. Durch diese Buchsen können dann die Befestigungselemente im angeordneten Zustand der Dichtung am Gehäuseflansch hindurch geführt werden.

Ebenfalls kann vorgesehen sein, dass die Positionierelemente zumindest teilweise als Stiftelemente ausgebildet sind, welche an einer an den Gehäuseflansch anlegbaren Unterseite des Dichtungskörpers angeordnet sind und welche in Positionieröffnungen im Gehäuseflansch anordenbar sind. Der Gehäuseflansch weist also Positionieröffnungen auf, in welche die Stiftelemente zum korrekten Positionieren eingeführt werden können. Die Stiftelemente können beispielsweise einteilig mit dem Dichtungskörper ausgebildet sein.

In einer weiteren Ausführungsform der Erfindung sind die Fixierelemente zumindest teilweise als Stopfenelemente ausgebildet, welche an einer an den Gehäuseflansch anlegbaren Unterseite des Dichtungskörpers angeordnet sind und welche zum Fixieren des Dichtungskörpers am Gehäuseflansch in Fixieröffnungen im Gehäuseflansch einpressbar sind. Der Gehäuseflansch weist also, beispielsweise zusätzlich zu den Positionieröffnungen, auch Fixieröffnungen auf. Die Stopfenelemente können einteilig mit dem Dichtungskörper oder separat zum Dichtungskörper ausgebildet sein. Die Stopfenelemente können beispielweise unter Druck von einer dem Gehäusedeckel zugewandten Oberseite des Gehäuseflansches in die Fixieröffnungen gepresst werden. Alternativ dazu können die Stopfenelemente von einer dem Gehäusedeckel abgewandten Unterseite des Gehäuseflansches in die Fixieröffnungen eingezogen werden. Durch das Einpressen der Stopfenelemente in die Fixieröffnungen wird eine Presspassung zwischen dem Dichtungskörper und dem Gehäuseflansch bereitgestellt, durch welche die Dichtung besonders zuverlässig in einer definierten Lage am Gehäuseflansch gehalten werden kann.

Besonders bevorzugt sind die Stopfenelemente zum Einführen eines Montagehilfsmittels in die Stopfenelemente und zum Einpressen der Stopfenelemente in die Fixieröffnungen hohl ausgebildet. Das Montagehilfsmittel kann beispielsweise ein Stift sein, welcher in das hohle Stopfenelement eingeführt wird und mit Hilfe dessen das Stopfenelement von oben in die Fixieröffnung des Gehäuseflansches eingepresst werden kann. So kann die Dichtung besonders einfach und schnell am Gehäuseflansch fixiert werden.

Zur Erfindung gehört außerdem eine Hochvoltbatterie für ein elektrisch antreibbares Kraftfahrzeug aufweisend ein erfindungsgemäßes Batteriegehäuse und zumindest eine Batteriezelle, welche in einem Innenraum des Batteriegehäuses angeordnet ist. Ein erfindungsgemäßes Kraftfahrzeug umfasst eine erfindungsgemäße Hochvoltbatterie. Das Kraftfahrzeug ist insbesondere als ein Elektro- oder Hybridfahrzeug ausgebildet und weist die Hochvoltbatterie als Traktionsbatterie auf.

Die mit Bezug auf die erfindungsgemäße Dichtung vorgestellten Ausführungsformen und deren Vorteile gelten entsprechend für das erfindungsgemäße Verfahren, für das erfindungsgemäße Batteriegehäuse, für die erfindungsgemäße Hochvoltbatterie sowie für das erfindungsgemäße Kraftfahrzeug.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar.

Die Erfindung wird nun anhand eines bevorzugten Ausführungsbeispiels sowie unter Bezugnahme auf die Zeichnungen näher erläutert. Es zeigen:
- Fig. 1: eine schematische Darstellung einer Dichtung für ein Batteriegehäuse in einer Herstellungslage;
- Fig. 2: eine schematische Darstellung einer Dichtung für ein Batteriegehäuse in einer Einbaulage;
- Fig. 3: eine schematische Darstellung von Faltbereichen, Fixierbereichen und Positionierbereichen einer ersten Ausführungsform der Dichtung;
- Fig. 4: eine schematische Darstellung von Faltbereichen, Fixierbereichen und Positionierbereichen einer zweiten Ausführungsform der Dichtung;
- Fig. 5: eine schematische Darstellung eines Faltbereiches in gefaltetem Zustand und entfaltetem Zustand;
- Fig. 6: eine schematische Darstellung eines Positionierbereiches und/oder Fixierbereiches in unüberstrecktem Zustand und überstrecktem Zustand
- Fig. 7: eine schematische Darstellung der Dichtung im Bereich einer Rahmenkante; und
- Fig. 8: eine schematische Darstellung der Dichtung beim Montieren an einem Gehäuseflansch des Batteriegehäuses.

In den Figuren sind gleiche sowie funktionsgleiche Elemente mit den gleichen Bezugszeichen versehen.

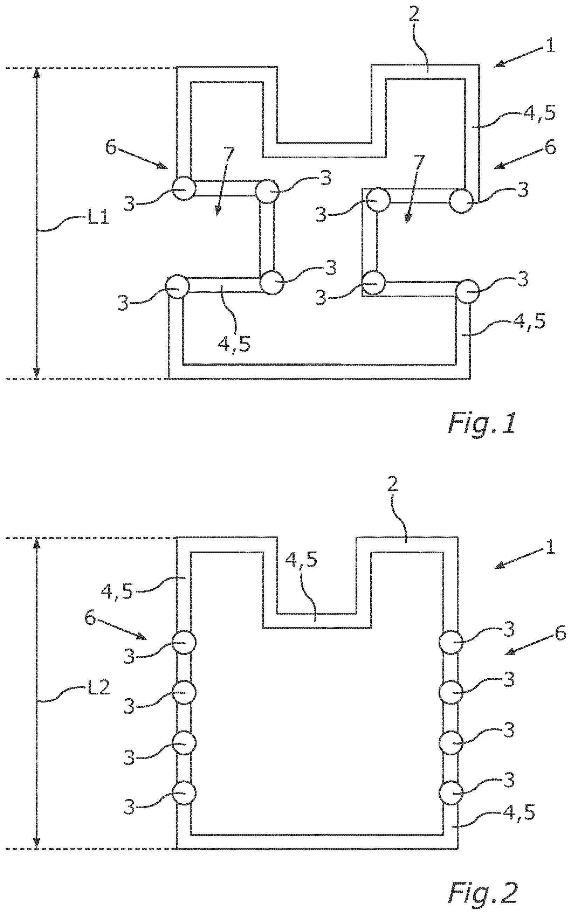

Fig. 1 und Fig. 2 zeigen in vereinfachter Darstellung eine Dichtung 1 für ein hier nicht gezeigtes Batteriegehäuse einer Hochvoltbatterie in unterschiedlichen Lagen. Die Dichtung 1 wird dabei zwischen einem Gehäuseflansch eines Gehäuseunterteils des Batteriegehäuses und einem Gehäusedeckel des Batteriegehäuses angeordnet. In Fig. 1 ist die Dichtung 1 in einer Herstellungslage, in welcher die Dichtung 1 in einem Herstellungswerkzeug hergestellt wird, und in Fig. 2 ist die Dichtung 1 in einer Einbaulage, in welche die Dichtung 1 am Gehäuseflansch angeordnet wird, gezeigt. In der Herstellungslage der Dichtung 1 weist diese ein erstes Außenmaß auf und in der Einbaulage der Dichtung 1 weist diese ein im Vergleich zum ersten Außenmaß größeres zweites Außenmaß auf.

Die Dichtung 1 weist einen Dichtungskörper 2 aus einem elastischen Kunststoff, insbesondere einem Elastomer, auf. Der Dichtungskörper 2 ist einstückig und rahmenförmig ausgebildet und weist in der Einbaulage gemäß Fig. 2 eine mit einer Form des Gehäuseflansches korrespondierende Form, hier eine rechteckige Form mit einer Einbuchtung, auf. Der Dichtungskörper 2 weist Faltbereiche 3, Positionierbereiche 4 und Fixierbereiche 5 auf. Die Faltbereiche 3 sind in Fig. 1 in einem gefalteten Zustand und in Fig. 2 in einem entfalteten Zustand gezeigt. Die Faltbereiche 3 sind hier in Dichtungskörperabschnitten 6 in Form von zwei gegenüberliegenden Rahmenkanten des rahmenförmigen Dichtungskörpers 2 ausgebildet. Durch die Faltbereiche 3 ist der zugehörige Dichtungskörperabschnitt 6 reversibel längenveränderlich ausgebildet. Hier weist jeder der zwei gegenüberliegenden Dichtungskörperabschnitte 6 vier Faltbereiche 3 auf, durch welche in der Herstellungslage eine nach innen ragende Lasche 7 in dem Dichtungskörperabschnitt 6 ausgebildet werden kann. In der Herstellungslage weisen die Dichtungskörperabschnitte 6, welche die Faltbereiche 3 aufweisen, aufgrund der nach innen ragenden Lasche 7 eine erste Länge L1 auf. In der Einbaulage weisen die Dichtungskörperabschnitte 6, welche die Faltbereiche 3 aufweisen, eine im Vergleich zur ersten Länge L1 größere zweite Länge L2 auf. Durch die unterschiedlichen Längen L1, L2 können also unterschiedliche, lagenspezifische Außenmaße des Dichtungskörpers 2 und damit der Dichtung 1 bereitgestellt werden.

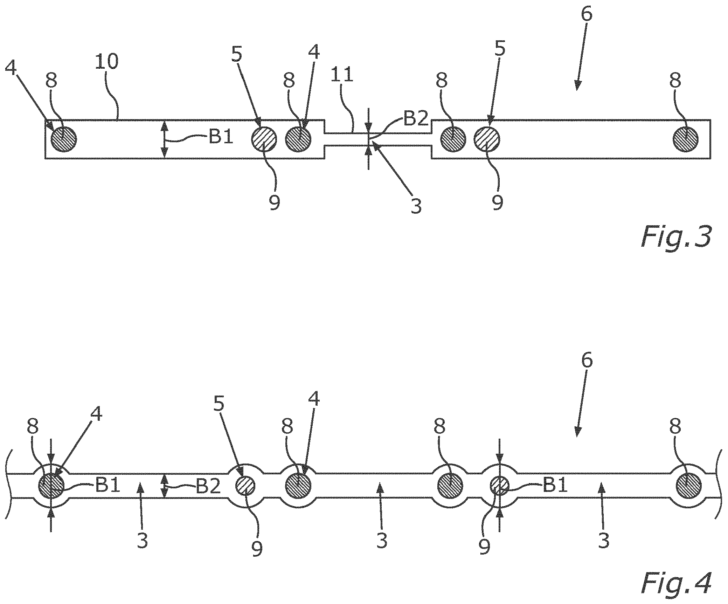

In den Positionierbereichen 4 und den Fixierbereichen 5 können, wie in Fig. 3 und Fig. 4 angedeutet, Positionierelemente 8 und Fixierelemente 9 angeordnet sein. Zumindest im Bereich der Positionierbereiche 4 und Fixierbereiche 5, in welchen die Positionierelemente 8 und Fixierelemente 9 angeordnet sind, weist der Dichtungskörper 2 eine erste Breite B1 auf, welche gegenüber einer zweiten Breite B2 der Faltbereiche 3 vergrößert ist. In Fig. 3 ist gezeigt, dass der Dichtungskörperabschnitt 6 mit den Faltbereichen 3 aus ersten streifenförmigen Abschnitten 10 und zweiten streifenförmigen Abschnitten 11 gebildet ist, wobei in den ersten streifenförmigen Abschnitten 10 die Positionierbereiche 4 und Fixierbereiche 5 angeordnet sind und in den zweiten streifenförmigen Abschnitten 11 die Faltbereiche 3 angeordnet sind. Die ersten streifenförmigen Abschnitte 10 weisen die erste Breite B1 auf und die zweiten streifenförmigen Abschnitte 11 weisen die zweite Breite B2 auf. In Fig. 4 ist gezeigt, dass die erste Breite B1 nur in den Positionierbereichen 4 und Fixierbereichen 5 ausgebildet ist.

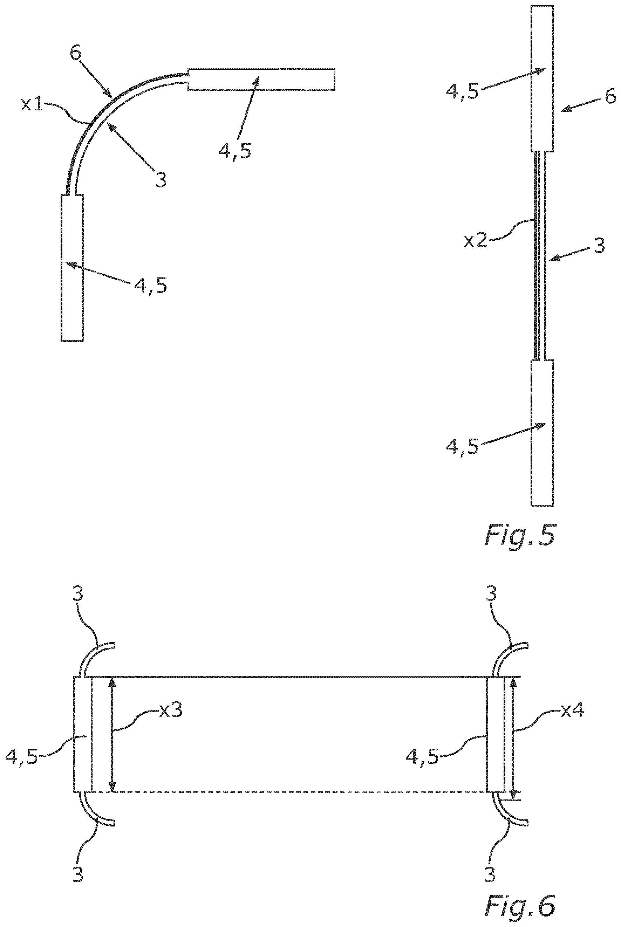

In Fig. 5 ist der Faltbereich 3 des Dichtungskörperabschnitts 6 gemäß Fig. 3 linksseitig in gefaltetem Zustand gezeigt und rechtsseitig in entfaltetem Zustand gezeigt. Der Faltbereich 3 ist überstreckbar ausgebildet und weist im gefalteten Zustand eine erste Länge x1 und im entfalteten Zustand eine im Vergleich zur ersten Länge x1 größere zweite Länge x2 auf. In Fig. 6 ist gezeigt, dass auch der Fixierbereich 5 und/oder der Positionierbereich 4 überstreckbar ausgebildet sein können. Dabei weist der Fixierbereich 5 und/oder Positionierbereich 4 im unüberstreckten Zustand eine dritte Länge x3 und im überstreckten Zustand eine im Vergleich zur dritten Länge x3 größere vierte Länge x4 auf. Durch die Überstreckbarkeit der Faltbereiche 3 und/oder Positionierbereiche 4 und/oder Fixierbereiche 5 kann eine definierte Lage der Dichtung 1 im Bauraum, beispielsweise in einer Nut des Gehäuseflansches, gewährleistet werden.

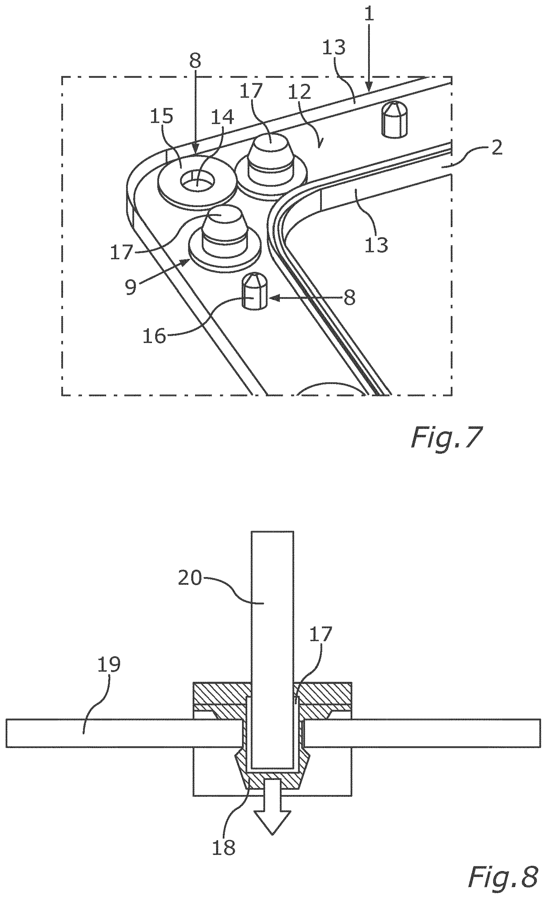

Fig. 7 zeigt die Dichtung 1 im Bereich einer Rahmenecke des Dichtungskörpers 2. Hier ist eine Unterseite 12 des Dichtungskörpers gezeigt, an welcher die Positionierelemente 8 und Fixierelemente 9 angeordnet sind. Der Dichtungskörper 2 weist zwei Dichtlippen 13 auf, welche hier an zwei gegenüberliegenden Rändern des Dichtungskörpers 2 ausgebildet sind. Zwischen den Dichtlippen 13 sind die Positionierelemente 8 und Fixierelemente 9 angeordnet. Es kann auch sein, dass beide Dichtlippen 13 an einem Rand des Dichtungskörpers 2 angeordnet sind, wobei eine Dichtlippe 13 nach oben absteht und eine Dichtlippe 13 nach unten absteht.

Die Positionierelemente 8 und/oder die Fixierelemente 9 können zumindest teilweise einteilig mit dem Dichtungskörper 2 ausgebildet sein. Die Positionierelemente 8 sind hier teilweise durch eine Durchgangsöffnung 14 in dem Dichtungskörper 2 sowie eine in der Durchgangsöffnung 14 angeordnete Buchse 15 ausgebildet. Durch diese Durchgangsöffnung 14 kann ein Befestigungselement, beispielsweise eine Schraube, zum Befestigen des Gehäusedeckels am Gehäuseflansch hindurchgeführt werden. Die Durchgangsöffnung 14 mit der Buchse 15 dient dabei als Abstandshalter und sorgt für eine definierte Lage der Dichtung 1 am Gehäuseflansch. Zusätzlich weist die Dichtung 1 hier noch Positionierelemente 4 in Form von Stiftelementen 16 auf, welche zum Positionieren der Dichtung 1 in Positionieröffnungen am Gehäuseflansch eingesteckt werden können.

Die Fixierelemente 5 sind hier durch Stopfenelemente 17 gebildet. Die Stopfenelemente 17 können in Fixieröffnungen 18 im Gehäuseflansch 19 (siehe Fig. 8) eingepresst werden. Die Stopfenelemente 17 sind insbesondere innen hohl ausgebildet, sodass, wie in Fig. 8 gezeigt, ein Montagehilfsmittel 20 in die Stopfenelemente 17 eingeführt werden kann. Mittels des Montagehilfsmittels 20 können die Stopfenelemente 17 besonders einfach in die Fixieröffnungen 18 eingeführt und eingepresst werden. Die Stopfenelemente 17 sind hier aus einem elastischen Material, beispielsweise einteilig mit dem Dichtungskörper 2, ausgebildet. Dadurch werden sie beim Einpressen in die Fixieröffnungen 18 gestaucht und somit in den Fixieröffnungen 18 gehalten. Auch können die Fixierelemente 5 formschlüssig mit dem Gehäuseflansch verbunden werden und einen Hinterschnitt erzeugen. Beispielsweise können die Fixierelemente 5 dazu als Klipselemente ausgebildet sein und in die Fixieröffnungen 18 eingeklipst werden.

## Patentansprüche

1. Dichtung (1) für ein Batteriegehäuse einer Hochvoltbatterie eines Kraftfahrzeugs, welche
- von einer für ein Herstellungswerkzeug vorgesehenen Herstellungslage in eine für das Batteriegehäuse vorgesehene Einbaulage, in welcher die Dichtung (1) ein größeres Außenmaß aufweist als in der Herstellungslage, überführbar ist,
- einen Dichtungskörper (2) zum Anordnen zwischen einem Gehäuseflansch eines Gehäuseunterteils des Batteriegehäuses und einem Gehäusedeckel des Batteriegehäuses aufweist, und
- Positionierelemente (8) und Fixierelemente (9) zum Positionieren und Fixieren des Dichtungskörpers (2) an dem Gehäuseflansch aufweist,
wobei
- der Dichtungskörper (2) als ein einteiliger, rahmenförmiger Dichtungsring aus einem elastischen Kunststoff ausgebildet ist und zumindest einen reversibel längenveränderlichen Dichtungskörperabschnitt (6) mit Faltbereichen (3) aufweist,
- der zumindest eine Dichtungskörperabschnitt (6) im gefalteten Zustand der Faltbereiche (3) die Herstellungslage der Dichtung (1) und im entfalteten Zustand der Faltbereiche (3) die Einbaulage der Dichtung (1) bereitstellt, und
- Positionierbereiche (4) und Fixierbereiche (5), welche abseits der Faltbereiche (3) im Dichtungskörper (2) ausgebildet sind und in welchen die Positionierelemente (8) und Fixierelemente (9) angeordnet sind, mit einer größeren Breite (B1) ausgebildet sind als die Faltbereiche (3).

2. Dichtung (1) nach Anspruch 1,
**dadurch gekennzeichnet, dass**
die Faltbereiche (3) und/oder die Positionierbereiche (4) und/oder die Fixierbereiche (5) zum Vergrößern des Außenmaßes der Dichtung (1) in der Einbaulage für die Anordnung am Gehäuseflansch überstreckbar ausgebildet sind.

3. Dichtung (1) nach Anspruch 1 oder 2,
**dadurch gekennzeichnet, dass**
der Dichtungskörper (2) in Dichtungskörperabschnitten (6), welche zumindest zwei gegenüberliegende Rahmenkanten des rahmenförmigen Dichtungskörpers (2) ausbilden, jeweils zumindest vier Faltbereiche (3) aufweist, durch welche in den Rahmenkanten zum Reduzieren ihrer Längen jeweils zumindest eine nach innen ragende Lasche (7) klappbar ist.

4. Dichtung (1) nach einem der vorhergehenden Ansprüche,
**dadurch gekennzeichnet, dass**
die Positionierelemente (4) zumindest teilweise als Durchgangsöffnungen in den Positionierbereichen des Dichtungskörpers (2) zum Durchführen von Befestigungselementen, über welche der Gehäusedeckel am Gehäuseflansch befestigbar ist, ausgebildet sind.

5. Dichtung (1) nach Anspruch 4,
**dadurch gekennzeichnet, dass**
die Dichtung (1) Buchsen aufweist, welche in den Durchgangsöffnungen angeordnet sind und welche mit dem Dichtungskörper (2) mechanisch verbunden sind.

6. Dichtung (1) nach einem der vorhergehenden Ansprüche,
**dadurch gekennzeichnet, dass**
die Positionierelemente (4) zumindest teilweise als Stiftelemente (16) ausgebildet sind, welche an einer an den Gehäuseflansch anlegbaren Unterseite (12) des Dichtungskörpers (2) angeordnet sind und welche in Positionieröffnungen im Gehäuseflansch anordenbar sind.

7. Dichtung (1) nach einem der vorhergehenden Ansprüche,
**dadurch gekennzeichnet, dass**
die Fixierelemente (5) zumindest teilweise als Stopfenelemente (17) ausgebildet sind, welche an einer an den Gehäuseflansch anlegbaren Unterseite (12) des Dichtungskörpers (2) angeordnet sind und welche zum Fixieren des Dichtungskörpers (2) am Gehäuseflansch in Fixieröffnungen (18) im Gehäuseflansch einpressbar sind.

8. Dichtung (1) nach Anspruch 7,
**dadurch gekennzeichnet, dass**
die Stopfenelemente (17) zum Einführen eines Montagehilfsmittels (20) in die Stopfenelemente (17) und zum Einpressen der Stopfenelemente (17) in die Fixieröffnungen (18) im Gehäuseflansch mittels des Montagehilfsmittels (20) hohl ausgebildet sind.

9. Dichtung (1) nach einem der vorhergehenden Ansprüche,
**dadurch gekennzeichnet, dass**
die Positionierbereiche (4) und die Fixierbereiche (5) in ersten streifenförmigen Abschnitten (10) des Dichtungskörpers (2) angeordnet sind und die Faltbereiche (3) durch zweite streifenförmige Abschnitte (11) des Dichtungskörpers (2) ausgebildet sind, wobei die ersten streifenförmigen Abschnitte (10) eine erste Breite (B1) aufweisen und die zweiten streifenförmigen Abschnitte (11) eine im Vergleich zur ersten Breite (B1) kleinere zweite Breite (B2) aufweisen.

10. Dichtung (1) nach einem der vorhergehenden Ansprüche,
**dadurch gekennzeichnet, dass**
die Dichtung (1) als eine Profildichtung ausgebildet ist und der Dichtungskörper (2) zumindest zwei, an zumindest einem Rand des Dichtungskörpers verlaufende Dichtlippen aufweist.

11. Verfahren zum Herstellen einer Dichtung (1) nach einem der vorhergehenden Ansprüche in einem Herstellungswerkzeug, wobei
- zum Herstellen des einstückigen Dichtungskörpers (2) die Faltbereiche (3), die Positionierbereiche (4) und Fixierbereiche (5) durch rahmenförmiges Spritzgießen eines elastischen Kunststoffes in zumindest zwei unterschiedlichen Breiten (B1, B2) ausgebildet werden,
- die Faltbereiche (3) zumindest eines Dichtungskörperabschnitts (6) zum Bereitstellen der Herstellungslage der Dichtung (1) im gefalteten Zustand hergestellt werden; und
- während und/oder nach dem Herstellen des Dichtungskörpers (2) die Positionierelemente (8) und die Fixierelemente (9) in den Positionierbereichen (4) und den Fixierbereichen (5) an dem Dichtungskörper (2) angeordnet werden.

12. Batteriegehäuse für eine Hochvoltbatterie eines Kraftfahrzeugs mit einem Gehäuseunterteil, einem Gehäusedeckel und einer Dichtung (1) nach einem der Ansprüche 1 bis 10, wobei die Dichtung (1) zwischen dem Gehäusedeckel und einem Gehäuseflansch des Gehäuseunterteils angeordnet ist.

13. Batteriegehäuse nach Anspruch 12,
**dadurch gekennzeichnet, dass**
in dem Gehäuseflansch eine Nut angeordnet ist, in welcher die Dichtung (1) angeordnet ist.

14. Hochvoltbatterie für ein elektrisch antreibbares Kraftfahrzeug aufweisend ein Batteriegehäuse nach Anspruch 12 oder 13 und zumindest eine Batteriezelle, welche in einem Innenraum des Batteriegehäuses angeordnet ist.

15. Kraftfahrzeug aufweisend eine Hochvoltbatterie nach Anspruch 14.

## Claims

1. Seal (1) for a battery housing of a high-voltage battery of a motor vehicle, which
- can be transferred from a production position, which is provided for a production tool, to an installation position, which is provided for the battery housing and in which the seal (1) has a greater external dimension than in the production position,
- has a seal body (2) for arrangement between a housing flange of a housing lower part of the battery housing and a housing cover of the battery housing, and
- has positioning elements (8) and fixing elements (9) for positioning and fixing the seal body (2) on the housing flange,
wherein
- the seal body (2) is configured in the form of a one-part, frame-like seal ring composed of an elastic plastic and has at least one seal body portion (6) of reversibly variable length with fold regions (3),
- the at least one seal body portion (6) provides, in the folded state of the fold regions (3), the production position of the seal (1) and, in the unfolded state of the fold regions (3), the installation position of the seal (1), and
- positioning regions (4) and fixing regions (5), which are formed away from the fold regions (3) in the seal body (2) and in which the positioning elements (8) and fixing elements (9) are arranged, are configured with a greater width (B1) than the fold regions (3).

2. Seal (1) according to Claim 1,
**characterized in that**
the fold regions (3) and/or the positioning regions (4) and/or the fixing regions (5) are configured so as to be able to be overstretched in order to enlarge the external dimension of the seal (1) in the installation position for the arrangement on the housing flange.

3. Seal (1) according to Claim 1 or 2,
**characterized in that**
the seal body (2) has, in seal body portions (6) forming at least two opposite frame edges of the frame-like seal body (2), in each case at least four fold regions (3), by means of which in each case at least one inwardly projecting tab (7) can be folded in the frame edges in order to reduce the lengths thereof.

4. Seal (1) according to one of the preceding claims,
**characterized in that**
the positioning elements (4) are configured at least in some instances in the form of passage openings in the positioning regions of the seal body (2) for the purpose of guiding through fastening elements which can be used to fasten the housing cover to the housing flange.

5. Seal (1) according to Claim 4,
**characterized in that**
the seal (1) has bushings which are arranged in the passage openings and which are mechanically connected to the seal body (2).

6. Seal (1) according to one of the preceding claims,
**characterized in that**
the positioning elements (4) are configured at least in some instances in the form of pin elements (16), which are arranged on a lower side (12) of the seal body (2), said lower side being able to abut against the housing flange, and which can be arranged in positioning openings in the housing flange.

7. Seal (1) according to one of the preceding claims,
**characterized in that**
the fixing elements (5) are configured at least in some instances in the form of plug elements (17), which are arranged on a lower side (12) of the seal body (2), said lower side being able to abut against the housing flange, and which can be pressed into fixing openings (18) in the housing flange for the purpose of fixing the seal body (2) on the housing flange.

8. Seal (1) according to Claim 7,
**characterized in that**
the plug elements (17) are of hollow configuration for the purpose of introducing an assembly aid (20) into the plug elements (17) and for the purpose of pressing the plug elements (17) into the fixing openings (18) in the housing flange by means of the assembly aid (20).

9. Seal (1) according to one of the preceding claims,
**characterized in that**
the positioning regions (4) and the fixing regions (5) are arranged in first strip-like portions (10) of the seal body (2) and the fold regions (3) are formed by second strip-like portions (11) of the seal body (2), wherein the first strip-like portions (10) have a first width (B1) and the second strip-like portions (11) have a second width (B2) which is smaller than the first width (B1) .

10. Seal (1) according to one of the preceding claims,
**characterized in that**
the seal (1) is configured in the form of a profile seal and the seal body (2) has at least two sealing lips which run along at least one periphery of the seal body.

11. Method for producing a seal (1) according to one of the preceding claims in a production tool, wherein
- to produce the one-piece seal body (2), the fold regions (3), the positioning regions (4) and fixing regions (5) are formed by injection molding an elastic plastic in a frame-like manner in at least two different widths (B1, B2),
- the fold regions (3) of at least one seal body portion (6) are produced in the folded state for the purpose of providing the production position of the seal (1); and
- during and/or after production of the seal body (2), the positioning elements (8) and the fixing elements (9) are arranged in the positioning regions (4) and the fixing regions (5) on the seal body (2).

12. Battery housing for a high-voltage battery of a motor vehicle, having a housing lower part, a housing cover and a seal (1) according to one of Claims 1 to 10, wherein the seal (1) is arranged between the housing cover and a housing flange of the housing lower part.

13. Battery housing according to Claim 12,
**characterized in that**
a groove is arranged in the housing flange, the seal (1) being arranged in said groove.

14. High-voltage battery for an electrically drivable motor vehicle, having a battery housing according to Claim 12 or 13 and at least one battery cell which is arranged in an interior space of the battery housing.

15. Motor vehicle having a high-voltage battery according to Claim 14.

## Revendications

1. Joint d'étanchéité (1) pour un boîtier de batterie d'une batterie haute tension d'un véhicule automobile, qui
- peut être transféré d'une position de fabrication prévue pour un outil de fabrication à une position de montage prévue pour le boîtier de batterie, dans laquelle le joint d'étanchéité (1) présente une dimension extérieure plus grande que dans la position de fabrication,
- présente un corps de joint d'étanchéité (2) à agencer entre une bride de boîtier d'une partie inférieure de boîtier du boîtier de batterie et un couvercle de boîtier du boîtier de batterie, et
- présente des éléments de positionnement (8) et des éléments de fixation (9) pour positionner et fixer le corps de joint d'étanchéité (2) sur la bride de boîtier,
- le corps de joint d'étanchéité (2) étant réalisé sous la forme d'un anneau d'étanchéité en forme de cadre d'une seule pièce en une matière plastique élastique et présentant au moins une section de corps de joint d'étanchéité (6) de longueur variable de manière réversible avec des zones de pliage (3),
- l'au moins une section de corps de joint d'étanchéité (6) fournissant, à l'état plié des zones de pliage (3), la position de fabrication du joint d'étanchéité (1) et, à l'état déplié des zones de pliage (3), la position de montage du joint d'étanchéité (1), et
- des zones de positionnement (4) et des zones de fixation (5), qui sont réalisées à l'écart des zones de pliage (3) dans le corps de joint d'étanchéité (2) et dans lesquelles sont agencés les éléments de positionnement (8) et les éléments de fixation (9), étant réalisées avec une largeur (B1) plus grande que les zones de pliage (3).

2. Joint d'étanchéité (1) selon la revendication 1,
**caractérisé en ce que**
les zones de pliage (3) et/ou les zones de positionnement (4) et/ou les zones de fixation (5) sont réalisées sous forme extensible pour agrandir la dimension extérieure du joint d'étanchéité (1) dans la position de montage pour l'agencement sur la bride de boîtier.

3. Joint d'étanchéité (1) selon la revendication 1 ou 2,
**caractérisé en ce que**
le corps de joint d'étanchéité (2) présente, dans des sections de corps de joint d'étanchéité (6) qui réalisent au moins deux bords de cadre opposés du corps de joint d'étanchéité en forme de cadre (2), respectivement au moins quatre zones de pliage (3) à travers lesquelles au moins une patte (7) faisant saillie vers l'intérieur peut respectivement être rabattue dans les bords de cadre pour réduire leurs longueurs.

4. Joint d'étanchéité (1) selon l'une quelconque des revendications précédentes,
**caractérisé en ce que**
les éléments de positionnement (4) sont réalisés au moins partiellement sous forme d'ouvertures de passage dans les zones de positionnement du corps de joint d'étanchéité (2) pour le passage d'éléments de fixation par l'intermédiaire desquels le couvercle de boîtier peut être fixé à la bride de boîtier.

5. Joint d'étanchéité (1) selon la revendication 4,
**caractérisé en ce que**
le joint d'étanchéité (1) présente des douilles qui sont agencées dans les ouvertures de passage et qui sont reliées mécaniquement au corps de joint d'étanchéité (2).

6. Joint d'étanchéité (1) selon l'une quelconque des revendications précédentes,
**caractérisé en ce que**
les éléments de positionnement (4) sont réalisés au moins partiellement sous forme d'éléments à broche (16) qui sont agencés sur un côté inférieur (12) du corps de joint d'étanchéité (2) pouvant être appliqué contre la bride de boîtier et qui peuvent être agencés dans des ouvertures de positionnement dans la bride de boîtier.

7. Joint d'étanchéité (1) selon l'une quelconque des revendications précédentes,
**caractérisé en ce que**
les éléments de fixation (5) sont réalisés au moins partiellement sous forme d'éléments à bouchon (17) qui sont agencés sur un côté inférieur (12) du corps de joint d'étanchéité (2) pouvant être appliqué contre la bride de boîtier et qui peuvent être enfoncés dans des ouvertures de fixation (18) dans la bride de boîtier pour fixer le corps de joint d'étanchéité (2) à la bride de boîtier.

8. Joint d'étanchéité (1) selon la revendication 7,
**caractérisé en ce que**
les éléments à bouchon (17) sont réalisés sous forme creuse pour l'introduction d'un moyen auxiliaire de montage (20) dans les éléments à bouchon (17) et pour l'enfoncement des éléments à bouchon (17) dans les ouvertures de fixation (18) dans la bride de boîtier au moyen du moyen auxiliaire de montage (20).

9. Joint d'étanchéité (1) selon l'une quelconque des revendications précédentes,
**caractérisé en ce que**
les zones de positionnement (4) et les zones de fixation (5) sont agencées dans des premières sections en forme de bande (10) du corps de joint d'étanchéité (2) et les zones de pliage (3) sont réalisées par des deuxièmes sections en forme de bande (11) du corps de joint d'étanchéité (2), les premières sections en forme de bande (10) présentant une première largeur (B1) et les deuxièmes sections en forme de bande (11) présentant une deuxième largeur (B2) inférieure en comparaison de la première largeur (B1).

10. Joint d'étanchéité (1) selon l'une quelconque des revendications précédentes,
**caractérisé en ce que**
le joint d'étanchéité (1) est réalisé sous la forme d'un joint d'étanchéité profilé et le corps de joint d'étanchéité (2) présente au moins deux lèvres d'étanchéité s'étendant sur au moins un bord du corps de joint d'étanchéité.

11. Procédé de fabrication d'un joint d'étanchéité (1) selon l'une quelconque des revendications précédentes dans un outil de fabrication, dans lequel
- pour fabriquer le corps de joint d'étanchéité (2) d'une seule pièce, les zones de pliage (3), les zones de positionnement (4) et les zones de fixation (5) sont réalisées par moulage par injection en forme de cadre d'une matière plastique élastique en au moins deux largeurs différentes (B1, B2),
- les zones de pliage (3) d'au moins une section de corps de joint d'étanchéité (6) sont fabriquées pour fournir la position de fabrication du joint d'étanchéité (1) à l'état plié ; et
- pendant et/ou après la fabrication du corps de joint d'étanchéité (2), les éléments de positionnement (8) et les éléments de fixation (9) sont agencés dans les zones de positionnement (4) et les zones de fixation (5) sur le corps de joint d'étanchéité (2).

12. Boîtier de batterie pour une batterie haute tension d'un véhicule automobile, avec une partie inférieure de boîtier, un couvercle de boîtier et un joint d'étanchéité (1) selon l'une quelconque des revendications 1 à 10, dans lequel le joint d'étanchéité (1) est agencé entre le couvercle de boîtier et une bride de boîtier de la partie inférieure de boîtier.

13. Boîtier de batterie selon la revendication 12,
**caractérisé en ce**
**qu'**une rainure est agencée dans la bride de boîtier, dans laquelle le joint (1) est agencé.

14. Batterie haute tension pour un véhicule automobile à propulsion électrique, présentant un boîtier de batterie selon la revendication 12 ou 13 et au moins une cellule de batterie agencée dans un espace intérieur du boîtier de batterie.

15. Véhicule automobile présentant une batterie haute tension selon la revendication 14.
